# EUROPEAN PATENT APPLICATION

(11) **EP 2 790 144 A1**
(43) Date of publication of application: **15.10.2014**
(21) Application number: 14164260.3
(22) Date of filing: 10.04.2014
(51) Int. Cl.: G06Q 10/10

(54) **Method and system for testing an electrical appliance**

(30) Priority: 11.04.2013 SI 201300092
(71) Applicant: METREL d.d., 1354 Horjul (SI)
(72) Inventor: Gabrovsek, Peter, 1354 Horjul (SI)
(74) Representative: Von Kreisler Selting Werner - Partnerschaft von Patentanwälten und Rechtsanwälten mbB

(57) **Abstract**

Method for testing an electrical appliance (40), with the following steps:
- Selecting of at least one electronic test to be performed on the electrical appliance (40),
- Perform the at least one selected electronic test on the electrical appliance,
- Generate a first QR-Code (36), wherein at least the information of the electrical appliance and the test results of the performed electronic tests are recorded on the first QR-Code (36),
- Attach the first QR-Code (36) to the tested electrical appliance (40).

## Description

The invention refers to a method and a system for testing an electrical appliance.

Electrical appliance/electrical equipment is used in many fields. The primary goal is always to use all electrical appliances without danger. Therefore there exists methods and systems for testing such electrical appliances. It is known in the prior art that in a first step at least one electronic test to be performed on electrical appliance is selected and then in a next step the at least one selected electronic test is performed on the electrical appliance. The test results have to be stored and documented.

The disadvantage is that in case a measuring device is used for many different electrical appliances the stored capacity has to be very large. Further such test results and documentation has to be allocated to the specific tested electrical appliances. In case new measuring devices are used such old test results and the documentation might get lost.

The object of the present invention is therefore to provide a method and a device for testing an electrical appliance wherein the storage of the test results is very easy and is easily allocatable to the tested electrical appliances.

The problem is solved by the features of claims 1 and 13.

The invention advantageously provides a method for testing an electrical appliance, with the following steps:
- Selecting of at least one electronic test to be performed on the electrical appliance,
- Perform the at least one selected electronic test on the electrical appliance,
- Generate a first QR-Code, wherein at least the information of the electrical appliance and the test result of the performed electronic test are recorded on the first QR-Code,
- Attach the first QR-Code to the tested electrical appliance.

This has the advantage that the test results and also information of the electrical appliance can be recorded on the first QR-Code. This QR-Code is attachable to the tested electrical appliance. Therefore no large storage capacity for the test results or the information of the electrical appliance have to be used in the test/measuring device. Further it has the advantage that the test results and also the information of the electrical appliance are allocatable to the specific electrical appliance since the QR-Code is attached to the tested electrical appliance.

The QR-Code (Quick Response-Code) is a matrix barcode or two dimensional barcode. The code consists of black modules (square dots) arranged in a square grid on a white background. The information encoded may be made up of four standardized types of data (numeric, alphanumeric, byte / binary, Kanji) or, through supported extensions, virtually any type of data. QR-Code is an optical machine readable label and can be attached to items.

Prior to selecting of the at least one electronic test a second QR-Code, which is attached to the electrical appliance, can be read, wherein at least information of the electronic appliance to be tested can be recorded in the second QR-Code.

The selection of the at least one electronic test can be carried out dependent on the recorded information in the second QR-Code.

This has the advantage that the information of the electrical appliance has not to be inputted into the measuring/test device in order to select at least one electronic test. Which electronic test is selected depends further on, for example, the safety standard according to which the electrical appliance should be tested. There are different standards in different countries. Further also companies can have their own standard.

A risk assessment can be performed in order to determine the time or the time period at which the next test of the electrical appliance should be performed.

Risk assessment can be dependent on at least the recorded information in the second QR-Code and/or the test results of the performed at least one selected electronic test.

The results of the risk assessment, especially the time or the time period in which the next test of the electrical appliance should be performed, is additional recorded on the first QR-Code. This has the advantage that it can be easily checked when the next test has to be performed on the specific electrical appliance.

The information of the electrical appliance to be tested, which are recorded in the first and/or in the second QR-Code, comprise at least one of the following information:
- type of electrical appliance,
- appliance construction,
- environment of appliance,
- appliance name,
- appliance serial number,
- appliance model,
- class of the appliance.

In the first and/or the second QR-Code at least one of the following additional information can be recorded:
- old test results,
- test limits,
- test duration,
- list of the electronic tests to be performed,
- standard according to which the electronic appliance should be tested,
- results of visual inspection,
- results of old risk assessment.

The risk assessment can be performed dependent on old test results.

The first QR-Code can replace the second QR-Code or can be attachable additionally to the second QR-Code to the electrical appliance.

The selection of the at least one electronic test to be performed on the electrical appliance can be carried out dependent on the recorded information in the second QR-Code and a defined standard.

The at least one selected electronic test can be at least one of the following:
- earth bond test,
- insulation test,
- subleakage test,
- leakage current tests,
- PE conductor leakage current test,
- differential leakage current test,
- touch leakage test,
- polarity test,
- load and leakage currents test,
- functional test.

With the earth bond test it is determined that the contacts between accessible metal parts and PE conductor are firm, that the PE wire in the appliance supply cord is undamaged and that there are no signs of poor contacts, corrosion etc..The insulation test is a measurement of the insulation resistance between life conductors and all accessible metal parts. The subleakage test is a check of the overall impendence between life conductors and all accessible metal parts. Capacitive leakage paths (input filter capacitors, transformers) are included in the results, too. At the leakage current test the sum of leakage currents caused by appliance insulation resistances (resistance currents through the insulation material, fault currents through decrease insulation) and capacitances (capacitive leakage current) is checked. Touch leakage test measures the leakage (capacitive, resistance, fault) currents that would flow via the isolated accessible metal part (if touched) through body to ground. In the polarity test the correct polarity of IEC leads, prolongation cords etc. is checked. The functional check is simply a check to ensure that the appliance is working probably.

Further the present invention advantageously provides a system for testing an electric appliance comprising
- a measuring device to perform at least one electronic test on the electrical appliance and to analyse the test results of the at least one electronic test,
   wherein a QR-Code printer is provided to print a QR-Code on which at least the test results are recorded.

This has the advantage that no storage capacities in the measuring device have to be used and further the test results are allocatable to the specific electrical appliance.

A QR-Code reader can be provided to read a QR-Code which is attached to an electrical appliance to be tested.

The measuring device can be adapted to perform a risk assessment in order to determine the time or the time period at which the next test of the electrical appliance should be performed.

The following is a detailed description of preferred embodiments of the invention with reference to the accompanying drawings:
- Fig. 1: a measurement device,
- Fig. 2: a side of the measurement device,
- Fig. 3: the other side of the measurement device,
- Fig. 4: a system for testing an electrical appliance,
- Fig. 5: a flow chart of test sequences for testing of appliances according to British standards,
- Fig. 6: a flow chart for test sequences for testing of appliances according to VDE 701 standard,
- Fig. 7: a table according to which a risk assessment can be performed,

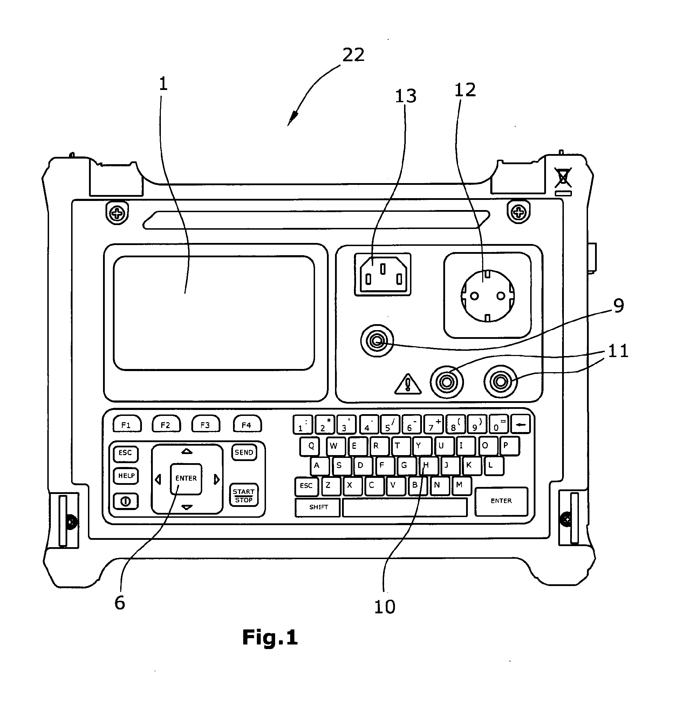

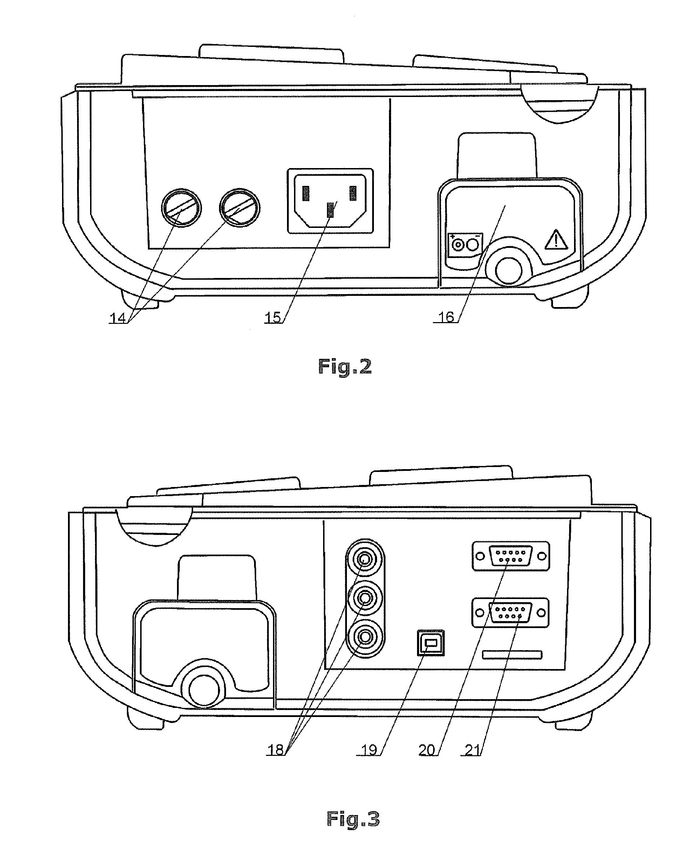

Fig. 1 shows a measuring/testing device 22 for testing an electrical appliance. Fig. 2 and fig. 3 show the left and the right side of the measuring device 22. The measuring device 22 comprises a display 1, an input unit 6 and a keyboard 10.

Further the measuring device 22 exhibit different electric connectors. For example the device comprises an IEC appliance connector 13, which can be used to test supply cords. Further there exists a test socket 12 and PE and LN sockets 11. Further as can be taken from fig. 1 there is a test probe connector 9. On the side shown in fig. 3 current clamp adapter input sockets 18, an USB connector 19, a QR-Code reader connector 20 and a QR-Code printer connector 21 are arranged.

As can be taken from fig. 2 the measuring device exhibit also fuses 14 for instrument protection, a main supply connector 15 and a battery with a battery compartment cover 16.

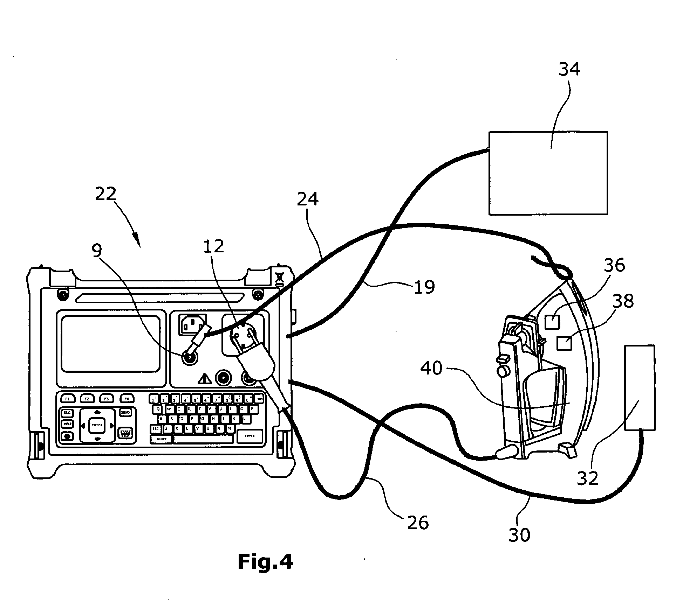

As can be taken from fig. 4 the system for testing an electrical appliance comprises a measuring device 22 and the QR-Code printer 28 which is connected with the measuring device 22 through the QR-Code printer connector 21. Further the shown measuring device 22 exhibit a QR-Code reader connector 20. This QR-Code reader connector 20 is not mandatory. The QR-Code reader connector 20 is connected to a QR-Code reader 32.

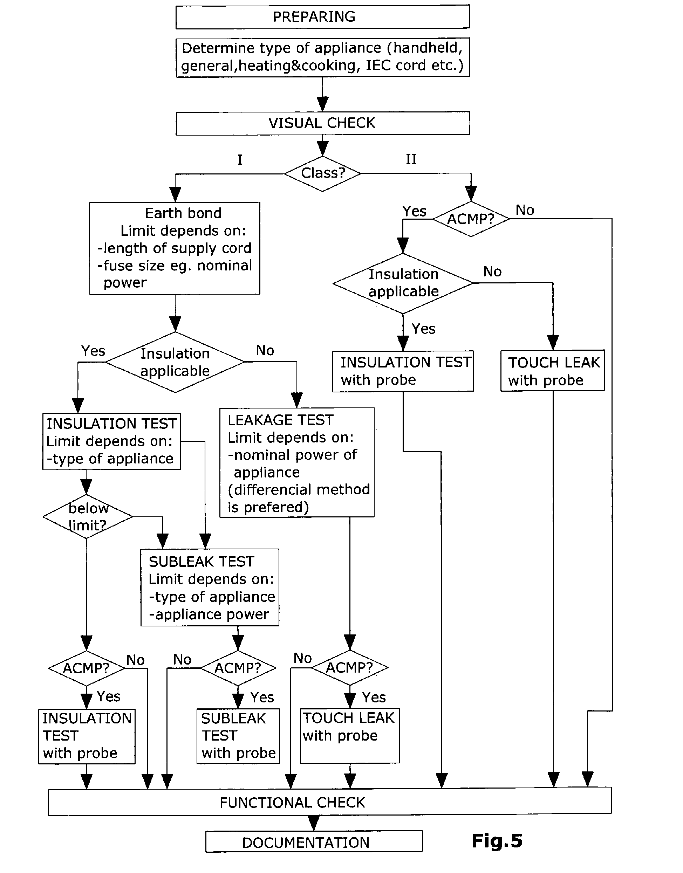

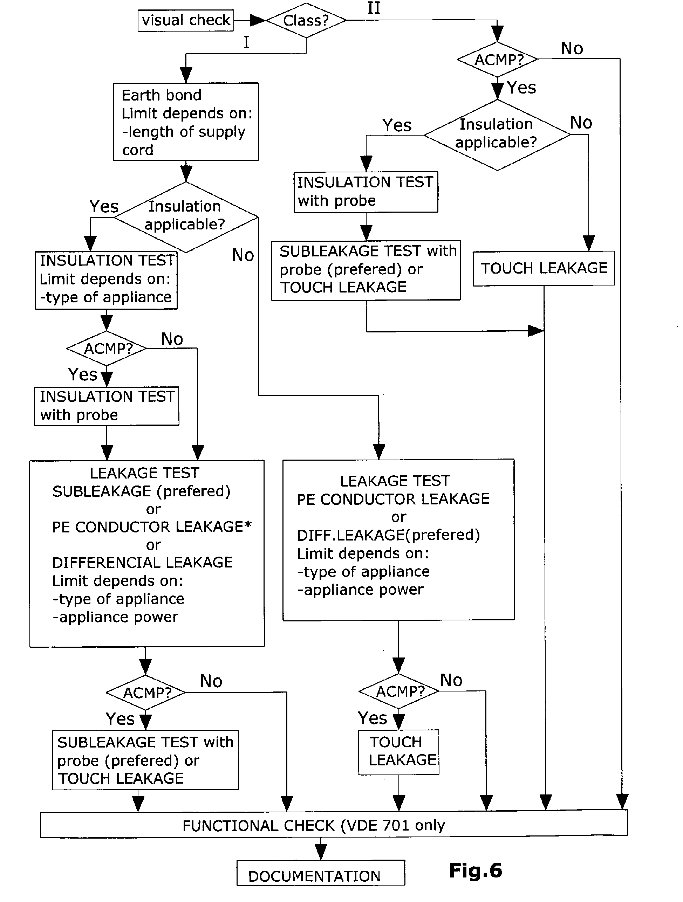

The electrical appliance 40 can be tested according to the following method. First at least one electrical test to be performed on the electrical appliance should be selected. This selection is explained in more detail with respect to fig. 5 and 6.

In the next step the at least one selected electronic test is performed on the electrical appliance 40. In fig. 4 an earth bond test is shown. With the earth bond test it is determined that the contacts between accessible metal parts and PE conductor are firm, that the PE wire in the appliance supply cord is undamaged and that there are no signs of poor contacts, corrosion etc..

The measured test results can now be compared to test limits. Typical test limits are e.g. for the VDE701/702 standard lower than 0,3 ohm up to 5 meter cord length plus 0,1 ohm per 7,5 meter cord length (max. 1 ohm). The UK regulations are 0,1 ohm up to 0,5 ohm dependent on fuse size and supply cord length.

Typical parameters under which such an earth bond test is performed are test currents of 200 mA (VDE701/702) or 100 mA, 200 mA, 4 A, 10 A and 25 A (British standard, which depends on appliance type).

In the next step the first QR-Code 36 can be generated, wherein at least the information of the electrical appliance and the test results of the performed electronic test are recorded on the first QR-Code 36. The test results can be just the measured test results itself and/or the result of the comparison with the test limits.

In the following step the first QR-Code 36 can be attached to the tested electrical appliance 40, which is shown in fig. 4.

Prior to the selecting of the at least one electronic test a second QR-Code 38, which is attached to the electrical appliance 40, can be read with the QR-Code reader 32. This second QR-code 38 can e.g. be a QR-code of a former test. In this second QR-Code 38 at least information of the electrical appliance to be tested are recorded. In case this information is read, this information doesn't have to be inputted into the measuring device 22.

The information of the electrical appliance 40 to be tested, which are recorded on the first and/or second QR-Code, comprise at least one of the following information: type of electrical appliance, appliance construction, environment of appliance, appliance name, appliance serial number, appliance model and class of the appliance.

The type of electrical appliance can be a stationary appliance, an information technology appliance, a moveable appliance, a portable appliance, a hand-held appliance or a fixed appliance. The environment of appliance can be in schools, hotels, offices and shops, appliances used by the public or industrial environment.

The class of the appliance is the ICE (International Electrotechnical Commission) protection class. There exists class 0, I, II and III.

Class 0 is for appliance in which protection against electric shock relies upon basic insulation only. There is no supplementary or reinforced insulation. There is no provision for the connection of accessible conductive parts, if any, to the protective conductor in the fixed wiring of the installation. In the event failure of the basic insulation, reliance is placed under environment in which the appliance is installed.

Class I appliances are appliances in which protection against electric shock does not rely basic insulation only, but which includes means for the connection of exposed-conductive-parts to protective conductor in the fixed wiring of the installation.

Class II appliances are appliances in which protection against electric shock does not rely on basic insulation only, but in which additional safety precautions such as a supplementary insulation are provided, there being no provision for the connection of exposed metalwork of the appliance to a protective conductor and no reliance upon precautions to be taken in the fixed wiring of the installation.

Class III appliances are appliances in which protection against electric shock relies on a supply at SELV (safety extra long voltage) and in which voltages higher than those of SELV are not generated.

The selection of the at least one electronic test in the measuring device 22 is carried out dependent on the recorded information in the second QR-Code 38. According to this information the electronic test can be selected.

Further it can depend on the standard according to which the electronic appliance should be tested. On the second QR-Code 38 the standard according which the electronic appliance should be tested can also be recorded or stored. As an alternative or additional a list of electronic tests to be performed can also be recorded on the second QR-Code 38. Also test limits can be stored on the second QR-Code 38. Further results of visual inspection can also be stored on this second QR-Code 38.

Fig. 5 and Fig. 6 show flow charts of test sequences for a testing of electronic appliances according to the British standard and according to the VDE701 standard. Dependent on the electrical appliance 40 to be tested, different electronic tests/sequence of electronic tests are performed.

As can be taken from the flow charts in fig. 5 and fig. 6 the information of the electrical appliance 40 to be tested which is stored/recorded on the second QR-Code 38 is necessary to decide which electronic tests like earth bond test, insulation test, subleakage test, leakage current test, PE conductor leakage current test, differential leakage current test, touch leakage test, polarity test, load and leakage current test, functional test should be selected.

In the measuring device 22 the different standards, different electronic tests and e.g. something similar to the shown flowcharts can be stored. After reading of the second QR-code 38 a specific standard can be selected. Then the measuring device 22 can automatically select the electronic tests to be performed.

As an alternative in the second QR-Code 38 the standard according to which the electronic appliance should be tested can also be stored. As a further alternative a list of electronic test can also be stored in the second QR-code 38. In this case the measuring device 22 just has to select the electronic tests mentioned in the stored list.

The present invention has the advantage that since all the information has not be inputted into the instrument/measurement device 22 the measurement takes less time and there is a the smaller possibility to make mistakes.

After the selection of the test sequence the test limits are selected. This information can also be stored in the second QR-Code. As an alternative the test limits can be stored on the device. Then the measured test results can be compared to the test limits.

Furthermore it is also possible to perform a risk assessment in order to determine the time or the time period at which the next test of the electronic appliance should be performed. This can also be done by the instrument/measurement device 22.

There is no standard for risk assessment. Every user can define his own standard.

The risk assessment can be dependent on at least a recorded information in the second QR-Code 38 and/or the test results of the performed at least one selected electronic test.

The time or the time period when next test of the electric appliance should be performed can be determined dependent on the information of the electric appliance stored in the second QR-code 38.

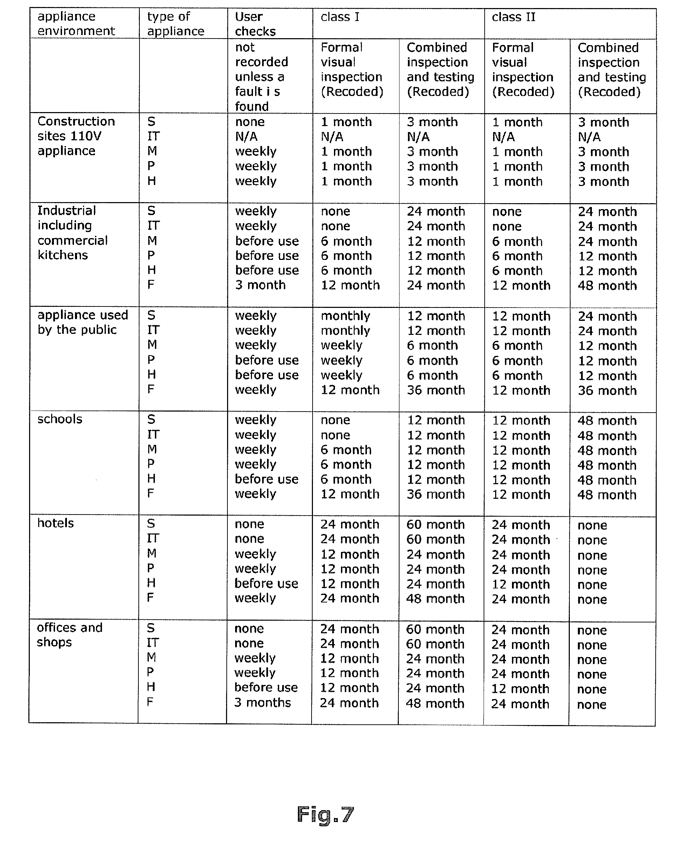

A table shown in fig. 7 can for example be stored in the measuring device 22. Dependent on the appliance environment, the type of appliance, the class of appliance which are all information which are stored on the second QR-code 38 the measuring device 22 can determine by means of the table shown in fig. 7 the time period when the next test and/or inspection should be performed. An inspection is a visual inspection. This is already a simple risk assessment.

In a more complicated risk assessment also the test results of the performed selected electronic test can be used. For example it might be regarded whether the test results are satisfying or whether they are non-satisfying or whether the measured test results are close to the test limits or far away from the test limits.

Furthermore the assessment can also be dependent on older test results which can also be recorded on the second QR-Code 38. It might also be regarded whether the old test results were satisfying or whether they are non-satisfying or whether the measured test results are close to the test limits or far away from the test limits.

The risk assessment can for example be performed dependent on the type of equipment, the class, the user (trained or not trained), the type of cable installation and the frequency of use and also the previous test results. The previous test results can be old test results an/or the current test results. All this information can be stored on the second QR-Code.

The result of the risk assessment is at least the information of the time or the time period when the next test should be performed but can also be the information whether there is a low, high or medium risk.

The results of the performed electronic tests and also the results of the risk assessment can be stored/recorded on the first QR-Code 36. This first QR-Code 36 can be generated and attached to the tested electrical appliance 40. The first QR-Code 36 can be attached additionally to the second QR-Code 38. As an alternative can the second QR-Code 38 be replaced by the first QR-code 36.

Further all information which is stored in the second QR-code 38 can also be stored in the first QR-code 36.

## Claims

1. Method for testing an electrical appliance (40), with the following steps:
- Selecting of at least one electronic test to be performed on the electrical appliance (40),
- Perform the at least one selected electronic test on the electrical appliance,
- Generate a first QR-Code (36), wherein at least the information of the electrical appliance and the test results of the performed electronic tests are recorded on the first QR-Code (36),
- Attach the first QR-Code (36) to the tested electrical appliance (40).

2. Method according to claim 1, wherein prior to selecting of the at least one electronic test a second QR-Code (38), which is attached to the electrical appliance (40), is read, wherein at least information of the electrical appliance (40) to be tested are recorded in the second QR-Code(38).

3. Method according to claim 2, wherein the selection of the at least one electronic test is carried out dependent on the recorded information in the second QR-code (38).

4. Method according to one of the claims 1 - 3, wherein a risk assessment is performed in order to determine the time or the time period at which the next test of the electrical appliance (40) should be performed.

5. Method according to claim 4, wherein risk assessment is dependent on at least the recorded information in the second QR-code (38) and/or the test results of the performed at least one selected electronic test.

6. Method according to claim 4 or 5, wherein the results of the risk assessment, especially the time or time period at which the next test of the electrical appliance should be performed, is additionally recorded on the first QR-Code (36).

7. Method according to one of the claims 1-6, wherein the information of the electrical appliance (40) to be tested, which are recorded in the first and/or in the second QR-Code (36, 38), comprise at least one of the following information:
- type of electrical appliance,
- appliance construction,
- environment of appliance,
- appliance name,
- appliance serial number,
- appliance model,
- class of the appliance.

8. Method according to one of the claims 1-7, wherein in the first and/or second QR-Code (36, 38)at least of the following additional information are recorded:
- old test results,
- test limits,
- test duration,
- list of the electronic tests to be performed,
- standard according to which the electronic appliance should be tested,
- results of visual inspection,
- results of old risk assessment.

9. Method according to claim 8, wherein the risk assessment is performed dependent on old test results.

10. Method according to one of the claims 1-9, wherein the first QR-code (36) replaces the second QR-code (38) or is attachable additionally to the second QR-code (38) to the electrical appliance (40).

11. Method according to one of the claims 1-10, wherein the selection of the at least one electronic test to be performed on the electrical appliance (40) is carried out dependent on the recorded information in the second QR-code (38) and a defined standard.

12. Method according to one of the claims 1-11, wherein the at least one selected electronic test can be at least one of the following:
- earth bond test,
- insulation test,
- subleakage test,
- leakage current tests,
- PE conductor leakage current test,
- differential leakage current test,
- touch leakage test,
- polarity test,
- load and leakage currents test,
- functional test.

13. System for testing an electrical appliance, comprising
- a measurement device (22) to perform at least one electronic test on the electrical appliance and to analyse the test results of the at least one electronic test,
**characterized in that**
a QR-code printer (34) is provided to print a QR-code (36) on which at least the test results are recorded.

14. System according to claim 12, wherein a QR-code reader (32) is provided to read a QR-code (36, 38) which is attached to a electrical appliance (40) to be tested.

15. System according to one of the claims 12 or 13, wherein the measuring device (22) is adapted to perfom a risk assessment in order to determine the time or the time period at which the next test of the electrical appliance (40) should be performed.
